# FASCICULE DE BREVET EUROPEEN

(11) **EP 3 114 605 B1**
(45) Date de publication et mention de la délivrance du brevet: **24.01.2018**
(21) Numéro de dépôt: 15707138.2
(22) Date de dépôt: 27.02.2015
(51) Int. Cl.: B42D 25/405, B42D 25/29, G07D 7/20, G06K 19/06, G06K 19/10, G07D 7/00, H04N 1/32, G07D 7/2033

(54) **PROCÉDÉ DE SÉCURISATION D'UN DOCUMENT**
VERFAHREN ZUR SICHERUNG EINES DOKUMENTS
METHOD FOR SECURING A DOCUMENT

(30) Priorité: 03.03.2014 FR 1451700
(43) Date de publication de la demande: 11.01.2017
(73) Titulaire: Advanced Track & Trace, 92500 Rueil-Malmaison (FR)
(72) Inventeur: MASSICOT, Jean-Pierre, F-92500 Rueil-Malmaison (FR); FOUCOU, Alain, F-92500 Rueil-Malmaison (FR); SAGAN, Zbigniew, F-92500 Rueil-Malmaison (FR)
(74) Mandataire: Cornuejols, Georges
(86) Numéro de dépôt international: PCT/EP2015/054213
(87) Numéro de publication internationale: WO 2015/132166

(56) Documents cités:
- WO-A2-2008/009826
- FR-A1- 2 925 195

## Description

### DOMAINE TECHNIQUE DE L'INVENTION

La présente invention concerne un procédé de sécurisation d'un document. Elle s'applique, notamment aux documents de sécurité en vue de leur authentification.

### ETAT DE LA TECHNIQUE

On connaît de nombreuses manières de protéger un contenu, ou message porté sur un support. Par exemple, un codage ou un chiffrement est appliqué aux données constituant ce message. Cependant, la simple connaissance de la clé de décodage ou de déchiffrement permet d'accéder au message. Or ces clés doivent être stockées sur des supports, par exemple papiers, plastiques ou électroniques ou sur des serveurs. Que ces clés soient portées par l'utilisateur ou stockés sur un système informatique, un tiers malveillant suffisamment outillé peut les atteindre.

Ces protections sont donc insuffisantes.

On connait également la demande de brevet internationale WO2008/009826 déposée le 24 janvier 2008. Cette demande divulgue uniquement un procédé d'intégration d'une marque dans un document en imprimant un code numérique.

### OBJET DE L'INVENTION

La présente invention vise à remédier à tout ou partie de ces inconvénients.

A cet effet, selon un premier aspect, la présente invention vise un procédé d'intégration d'une marque dans un document, qui comporte :
- une étape de sélection d'une trame à imprimer,
- une étape de sélection d'au moins une couleur de la trame sélectionnée,
- une étape de détermination d'une densité de couleur de chaque couleur sélectionnée pour la trame sélectionnée,
- pour chaque couleur sélectionnée, une étape de détermination d'un code numérique présentant, après impression, ladite densité de ladite couleur et
- une étape d'intégration dudit code numérique dans la trame de la couleur correspondante et
- une étape d'impression de ladite trame comportant ledit code.

Grâce à ces dispositions, on intègre dans un document un code imperceptible à l'oeil car il présente la même densité de couleur que la trame régulière du document.

Grâce à ces dispositions, on intègre dans un document un code imperceptible à l'oeil car il présente la même densité de couleur que la trame régulière du document.

Dans des modes de réalisation, ledit code numérique est une marque anti-copie numérique configurée pour, à la suite de l'étape l'impression, formé une marque anti-copie imprimée présentant un taux d'erreurs supérieur à cinq pour cent.

Dans des modes de réalisation, au cours de l'étape de détermination de la marque anti-copie numérique, on détermine la marque anti-copie numérique en fonction du système d'impression mis en oeuvre au cours de l'étape d'impression.

Dans des modes de réalisation, la marque anti-copie numérique est formée d'une matrice de cellules carrées ou rectangulaires prenant un état parmi une pluralité d'états prédéterminés, les dimensions desdites cellules provoquant, à la suite de l'étape d'impression, avec le système d'impression considéré, un taux de cellules erronées supérieur à cinq pour cent, une cellule erronée étant une cellule qui présente, sur plus de la moitié de sa surface, un état erroné, par rapport à la cellule correspondante de la matrice numérique de la marque anti-copie numérique.

Dans des modes de réalisation, la marque anti-copie numérique comporte des redondances.

Dans des modes de réalisation, le taux de redondances de la marque anti-copie numérique est supérieur à cinq.

Dans des modes de réalisation, le procédé objet de la présente invention comporte une étape de capture d'une image de la marque anti-copie imprimé, une étape de détermination d'un taux d'erreur par traitement de l'image captée, une étape de détermination d'une identification unique de la marque anti-copie imprimée par traitement de l'image captée et une étape de mémorisation du taux d'erreur et de l'identification unique de la marque anti-copie imprimée.

Dans des modes de réalisation, le procédé objet de la présente invention comporte, dans une imprimante-scanner, l'étape d'impression et l'étape de capture d'image, pendant le même mouvement relatif d'une feuille en regard de moyens d'impression et d'un capteur du scanner.

Dans des modes de réalisation, le procédé objet de la présente invention comporte une étape d'impression d'une marque robuste à la copie représentant l'identifiant unique et/ou le taux d'erreurs de la marque anti-copie.

Dans des modes de réalisation, le procédé objet de la présente invention comporte, au cours de l'étape de détermination du code numérique, une étape de compensation de la variation de densité de couleur due à l'impression dudit code par rapport à l'impression d'une trame régulière.

Selon un deuxième aspect, la présente invention vise un procédé d'archivage d'un document réalisé selon le procédé d'intégration objet de la présente invention, qui comporte une étape de lecture du code imprimé et une étape de mémorisation d'une image du document et d'une image du code lu.

Les avantages, buts et caractéristiques de ce procédé d'archivage étant similaires à ceux du procédé d'intégration objet de la présente invention, ils ne sont pas rappelés ici.

### BREVE DESCRIPTION DES FIGURES

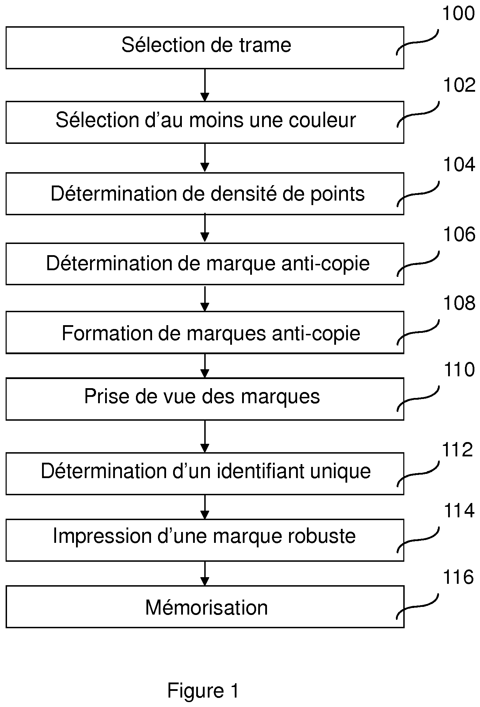

D'autres avantages, buts et caractéristiques particulières de la présente invention ressortiront de la description qui va suivre faite, dans un but explicatif et nullement limitatif, en regard du dessin annexé, dans lequel la figure 1 représente, sous forme d'un logigramme, des étapes d'un mode de réalisation particulier du procédé objet de la présente invention.

### DESCRIPTION D'EXEMPLES DE REALISATION DE L'INVENTION

On décrit, ci-après, l'intégration d'un code et d'une marque anti-copie dans la trame d'un document. Bien que l'on ne décrive, en regard des figures, que l'intégration d'une marque anti-copie, le procédé objet de la présente invention permet l'intégration, de la même manière, de codes dans un document.

Au cours d'une étape 100, on sélectionne un document, par exemple un papier à en-tête et une trame d'une partie de ce document, par exemple un logo d'une entreprise à imprimer sur le document.

Au cours d'une étape 102, on sélectionne au moins une couleur de la trame sélectionnée.

Au cours d'une étape 104, on détermine la densité de couleur de chaque couleur sélectionnée pour la trame sélectionnée.

Au cours d'une étape 106, on détermine, pour chaque couleur sélectionnée, une marque anti-copie numérique, fonction du système d'impression utilisé pour imprimer le document et présentant la densité de couleur de ladite couleur.

La marque anti-copie est, par exemple, formée d'une matrice de cellules carrées ou rectangulaires, les dimensions desdites cellules provoquant, lors de leur impression avec le système d'impression considéré, un taux de cellules erronées supérieur à cinq pour cent et, préférentiellement, supérieur à dix pour cent.

Dans des modes de réalisation, chaque cellule de la matrice ne peut prendre que deux états, par exemple imprimé avec ladite couleur, ou non imprimé avec ladite couleur.

Une cellule erronée est une cellule qui présente, sur plus de la moitié de sa surface, un état erroné, par rapport à la cellule correspondante de la matrice numérique originale. Une cellule erronée provient d'une erreur d'impression, imprévisible, cellule par cellule, due aux limites physiques du moyen d'impression, notamment en termes de résolution. Les erreurs s'assimilent ainsi à du bruit, le signal étant formé du contenu de la matrice numérique originale.

Préférentiellement, la marque anti-copie comporte des redondances. Le taux de redondances de la matrice anti-copie est supérieur à cinq et, préférentiellement, supérieur à dix, afin de corriger un taux d'erreurs supérieur à quarante pourcents, après réalisation de copies du document. On rappelle ici que chaque copie augmente le taux de cellules erronées. On détermine si un document et chaque marque anti-copie portée par ce document est l'original ou une copie, en mesurant ce taux d'erreurs, par capture d'une image de ladite marque anti-copie et
- décompte du nombre de redondances utilisées pour corriger ces erreurs et obtenir le deuxième message,
- en comparant l'image captée une matrice numérique mise à l'échelle ou
- en comparant l'image captée à une image conservée en mémoire et captée dès l'impression du document ;
et en comparant ce taux d'erreurs à une valeur limite prédéterminée, par exemple, dix pour cent, préférentiellement quinze pour cent, de cellules erronées supplémentaires par rapport à l'original imprimé.

On note que des marques anti-copies différentes peuvent se superposer pour former les trames des différentes couleurs, avec la densité de couleur recherchée.

On note qu'un facteur de correction peut être appliqué à la couleur recherchée pour modifier la densité de couleur de la marque anti-copie, pour tenir compte d'une modification de couleur constatée préliminairement à la construction du système d'impression, due aux erreurs attendues dans l'impression des marques anti-copie. En effet, par rapport à une trame régulière, les erreurs d'impression des marques anti-copie peuvent avoir pour effet d'augmenter le nombre de cellules imprimées, lorsque la densité est supérieure à la moitié ou de le réduire, lorsque la densité est inférieure à la moitié. Cet effet d'accentuation de la différence entre la densité de la marque anti-copie et la densité moyenne, lors de l'impression peut ainsi être compensé.

Au cours d'une étape 108, on insère la marque anti-copie dans la trame et on imprime la trame ainsi formée. On note que, du fait de la détermination de la marque anti-copie en fonction de la couleur visée, la marque anti-copie imprimée présente la couleur de la trame visée initialement.

Au cours d'une étape 110, on prend une image d'au moins une et, préférentiellement, chaque marque anti-copie imprimée. Dans des modes de réalisation, l'image est captée simultanément à l'impression. Par exemple, pour une imprimante comportant un scanner, ce scanner capte une image de chaque document imprimé, quelques centimètres plus loin que la zone d'impression, sur le trajet du papier.

Puis, au cours d'une étape 112, on traite l'image pour en extraire un taux d'erreur pour chaque marque anti-copie et, éventuellement, une identification unique, par exemple la transformée de Fourier en deux dimensions des valeurs observées dans la marque anti-copie, en conservant les valeurs de plus basses fréquences, par exemple les cinq ou dix premiers termes dans chaque direction, soit 25 à 100 valeurs. On obtient ainsi un identifiant unique de la marque anti-copie et donc du document sur lequel cette marque est imprimée.

Au cours d'une étape 114 optionnelle, on imprime une marque robuste à la copie et représentant l'identifiant unique et/ou le taux d'erreurs déterminés au cours de l'étape 112. Ainsi, il n'est pas nécessaire de disposer d'une base de données centralisée pour pouvoir authentifier le document. En lisant la marque robuste pour déterminer l'identifiant unique du document et en déterminant, de nouveau l'identifiant à partir de la marque anti-copie, on peut vérifier, localement, si le document est un original ou une copie.

Au cours d'une étape optionnelle 116, on mémorise, sur un serveur distant, l'identifiant unique du document. On peut ainsi, à distance, vérifier l'authenticité du document.

On utilise au moins une couleur pour, dans un graphisme, insérer un code ayant la densité voulue de la couleur et le forme particulière d'une marque anti-copie. Les redondances permettent une lecture facile et une mesure de dégradation.

On réalise ainsi une sérialisation d'un objet graphique, par exemple un papier à en-tête. Ce document devient un document de sécurité.

Dispositif particulier : imprimante laser.

Dans des modes de réalisation, on réalise l'impression et le scan successivement pendant le même mouvement respectivement au papier puis on intègre au papier une matrice de cellules plus grandes que les cellules de la marque anti-copie représentant le scan ou une empreinte tirée du scan, par exemple du texte imprimé sur le papier.

Le document peut ainsi être vérifié par un scan ultérieur :
- dans son contenu (intégrité),
- dans son authenticité d'original, par le papier à en-tête lui-même.

Pour de l'archivage, on scanne. Si déjà un code, on le vérifie et on archive. Si pas de code, on ajoute un ensemble de données relatif à l'ensemble de la procédure d'authentification, y compris scanner utilisé. On réalise ainsi un log d'une transaction dans un deuxième code lié au fichier d'archivage et reproduit à volonté. Même si le document physique est perdu, on peut reproduire une copie conforme car le log (fichier mémorisé) donne l'authenticité, y compris de la marque anti-copie.

## Revendications

1. Procédé d'intégration d'une marque dans un document, **caractérisé en ce qu'**il comporte :
- une étape de sélection d'une trame à imprimer,
- une étape de sélection d'au moins une couleur de la trame sélectionnée,
- une étape de détermination d'une densité de couleur de chaque couleur sélectionnée pour la trame sélectionnée,
- pour chaque couleur sélectionnée, une étape de détermination d'un code numérique présentant, après impression, ladite densité de ladite couleur et
- une étape d'intégration dudit code numérique dans la trame de la couleur correspondante et
- une étape d'impression de ladite trame comportant ledit code.

2. Procédé selon la revendication 1, dans lequel ledit code numérique est une marque anti-copie numérique configurée pour, à la suite de l'étape l'impression, former une marque anti-copie imprimée présentant un taux d'erreurs, par rapport à la trame comportant le code, supérieur à cinq pour cent.

3. Procédé selon la revendication 2, dans lequel, au cours de l'étape de détermination de la marque anti-copie numérique, on détermine la marque anti-copie numérique en fonction d'une modification de couleur constatée du système d'impression mis en oeuvre au cours de l'étape d'impression.

4. Procédé selon la revendication 3, dans lequel la marque anti-copie numérique est formée d'une matrice de cellules carrées ou rectangulaires prenant un état parmi une pluralité d'états prédéterminés, les dimensions desdites cellules provoquant, à la suite de l'étape d'impression, avec le système d'impression considéré présentant des limites physiques, un taux de cellules erronées supérieur à cinq pour cent, une cellule erronée étant une cellule qui présente, sur plus de la moitié de sa surface, un état erroné, par rapport à la cellule correspondante de la matrice numérique de la marque anti-copie numérique.

5. Procédé selon l'une des revendications 2 à 4, dans lequel la marque anti-copie numérique comporte des redondances.

6. Procédé selon la revendication 5, dans lequel le taux de redondances de la marque anti-copie numérique est supérieur à cinq.

7. Procédé selon l'une des revendications 2 à 6, qui comporte une étape de capture d'une image de la marque anti-copie imprimé, une étape de détermination d'un taux d'erreur par traitement de l'image captée, une étape de détermination d'une identification unique de la marque anti-copie imprimée par traitement de l'image captée et une étape de mémorisation du taux d'erreur et de l'identification unique de la marque anti-copie imprimée.

8. Procédé selon la revendication 7, qui comporte, dans une imprimante-scanner, l'étape d'impression et l'étape de capture d'image, pendant le même mouvement relatif d'une feuille en regard de moyens d'impression et d'un capteur du scanner.

9. Procédé selon l'une des revendications 7 ou 8, qui comporte une étape d'impression d'une marque robuste à la copie représentant l'identifiant unique et/ou le taux d'erreurs de la marque anti-copie.

10. Procédé selon l'une des revendications 1 à 9, qui comporte, au cours de l'étape de détermination du code numérique, une étape de compensation de la variation de densité de couleur due à l'impression dudit code par rapport à l'impression d'une trame régulière.

11. Procédé d'archivage d'un document réalisé selon le procédé selon l'une des revendications 1 à 10, qui comporte une étape de lecture du code imprimé et une étape de mémorisation d'une image du document et d'une image du code lu.

## Patentansprüche

1. Verfahren zur Integration eines Zeichens in ein Dokument, **dadurch gekennzeichnet, dass** es umfasst:
- einen Schritt zur Auswahl eines Druckrasters,
- einen Schritt zur Auswahl zumindest einer Farbe des ausgewählten Rasters,
- einen Schritt zur Bestimmung einer Farbdichte jeder ausgewählten Farbe für das ausgewählte Raster,
- für jede ausgewählte Farbe einen Schritt zur Bestimmung eines numerischen Codes, der nach dem Druck die Dichte der Farbe aufweist, und
- einen Schritt zur Integration des numerischen Codes in das Raster der entsprechenden Farbe, und
- einen Schritt zum Drucken des den Code umfassenden Rasters.

2. Verfahren nach Anspruch 1, wobei der numerische Code ein numerisches Kopierschutzzeichen ist, das konfiguriert ist, um anschließend an den Schritt zum Drucken ein gedrucktes Kopierschutzzeichen zu bilden, welches eine Fehlerrate im Verhältnis zu dem den Code umfassenden Raster aufweist, die größer als fünf Prozent ist.

3. Verfahren nach Anspruch 2, wobei man im Laufe des Schrittes zur Bestimmung des numerischen Kopierschutzzeichens das numerische Kopierschutzzeichen in Abhängigkeit von einer festgestellten Farbänderung des Drucksystems bestimmt, die im Laufe des Schrittes zum Drucken angewendet wird.

4. Verfahren nach Anspruch 3, wobei das numerische Kopierschutzzeichen aus einer Matrix von quadratischen oder rechteckigen Zellen gebildet wird, die einen Zustand aus einer Vielzahl von vorbestimmten Zuständen einnehmen, wobei die Abmessungen der Zellen im Anschluss an den Schritt zum Drucken mit dem betrachteten Drucksystem, welches physikalische Grenzen aufweist, eine Rate falscher Zellen von mehr als fünf Prozent bewirkt, wobei eine falsche Zelle eine Zelle ist, die auf mehr als der Hälfte ihrer Oberfläche einen falschen Zustand im Verhältnis zu der entsprechenden Zelle der numerischen Matrix des numerischen Kopierschutzzeichens aufweist.

5. Verfahren nach einem der Ansprüche 2 bis 4, wobei das numerische Kopierschutzzeichen Redundanzen umfasst.

6. Verfahren nach Anspruch 5, wobei die Redundanzrate des numerischen Kopierschutzzeichens größer als fünf ist.

7. Verfahren nach einem der Ansprüche 2 bis 6, das einen Schritt zur Erfassung eines Bildes des gedruckten Kopierschutzzeichens, einen Schritt zur Bestimmung einer Fehlerrate je Behandlung des erfassten Bildes, einen Schritt zur Bestimmung einer eindeutigen Identifizierung des gedruckten Kopierschutzzeichens je Behandlung des erfassten Bildes und einen Schritt zum Speichern der Fehlerrate und der eindeutigen Identifizierung des gedruckten Kopierschutzzeichens umfasst.

8. Verfahren nach Anspruch 7, das in einem Drucker-Scanner den Schritt zum Drucken und den Schritt zur Bilderfassung während derselben Bewegung relativ zu einem Blatt gegenüber von Druckmitteln und von einem Sensor des Scanners umfasst.

9. Verfahren nach einem der Ansprüche 7 oder 8, das einen Schritt zum Drucken eines kopierfesten Zeichens umfasst, das eine eindeutige Kennung und/oder die Fehlerrate des Kopierschutzzeichens repräsentiert.

10. Verfahren nach einem der Ansprüche 1 bis 9, das im Laufe des Schrittes zur Bestimmung des numerischen Codes einen Schritt zum Kompensieren der Variation der Farbdichte aufgrund des Drucks des Codes im Verhältnis zum Druck eines regelmäßigen Rasters umfasst.

11. Verfahren zur Archivierung eines nach dem Verfahren nach einem der Ansprüche 1 bis 10 realisierten Dokuments, welches einen Schritt zum Lesen des gedruckten Codes und einen Schritt zum Speichern eines Bildes des Dokuments und eines Bildes des gelesenen Codes umfasst.

## Claims

1. Method for incorporating a mark in a document, **characterized in that** it comprises:
- a step of selecting a frame to be printed;
- a step of selecting at least one color of the selected frame;
- a step of determining a color density of each color selected for the selected frame;
- for each color selected, a step of determining a digital code having, after printing, said density of said color; and
- a step of incorporating said digital code into the frame of the corresponding color; and
- a step of printing said frame comprising said code.

2. Method according to claim 1, wherein said digital code is a digital anti-copy mark configured to form, after the printing step, a printed anti-copy mark with an error rate above five percent compared to the frame comprising the code.

3. Method according to claim 2, wherein, during the step of determining the digital anti-copy mark, the digital anti-copy mark is determined based on an observed color modification of the printing system utilized during the printing step.

4. Method according to claim 3, wherein the digital anti-copy mark is formed of a matrix of square or rectangular cells that take a state among a plurality of predefined states, the dimensions of said cells causing, after the step of printing with the printing system under consideration, which has physical limitations, a rate of error cells above five percent, an error cell being a cell that, over more than half of its surface, has an error state compared to the corresponding cell in the digital matrix of the digital anti-copy mark.

5. Method according to one of claims 2 to 4, wherein the digital anti-copy mark comprises redundancies.

6. Method according to claim 5, wherein the redundancy percentage of the digital anti-copy mark is above five.

7. Method according to one of claims 2 to 6, which comprises a step of capturing an image of the printed anti-copy mark, a step of determining an error rate by processing the captured image, a step of determining a unique identification of the printed anti-copy mark by processing the captured image, and a step of storing the error rate and unique identification of the printed anti-copy mark.

8. Method according to claim 7, which comprises, in a printer-scanner, the step of printing and the step of capturing an image during the same relative motion of a sheet in front of the printing means and of the scanner's sensor.

9. Method according to one of claims 7 or 8, which comprises a step of printing a mark robust to copying that represents the unique identifier and/or the error rate of the anti-copy mark.

10. Method according to one of claims 1 to 9, which comprises, during the step of determining the digital code, a step of compensating the variation in color density due to printing said code compared to printing a regular frame.

11. Method of archiving a document produced according to the method according to one of claims 1 to 10, which comprises a step of reading the printed code and a step of storing an image of the document and an image of the code that was read.
